# EUROPEAN PATENT APPLICATION

(11) **EP 4 579 041 A1**
(43) Date of publication of application: **02.07.2025**
(21) Application number: 23868696.8
(22) Date of filing: 21.09.2023
(51) Int. Cl.: E01F 9/524, G02B 5/12, G02B 5/128

(54) **RETRO-REFLECTIVE ROAD STUD**

(30) Priority: 23.09.2022 RU 2022125013
(71) Applicant: Filippov, Ilia Aleksandrovich, 4702, Wallern an der Trattnach (AT)
(72) Inventor: BOCHKAREV, Vladimir Il'ich, Moscow, 109383 (RU); DMITRICHEV, Andrej Vladimirovich, Vladimir, 600014 (RU); ZHUSTARYOVA, Elena Vladimirovna, Moscow, 125445 (RU); FYODOROV, Sergej Valer'evich, Litvinovka, 182370 (RU)
(74) Representative: Jeck, Jonathan
(86) International application number: PCT/RU2023/050225
(87) International publication number: WO 2024/063672

(57) **Abstract**

The invention relates to road building, and more particularly to elements of road markings, which lend visibility to road markings during hours of darkness. The technical result of the proposed invention is an increase in operational reliability. Before the material of a road marking (8) has set, retroreflective road studs are mounted with their underside (2) in the road marking (8). The retroreflective road studs are partially embedded in the material of the road marking (8). Since the retroreflective road studs are made from the same material as that of the road marking (8), a single material object is formed which has a high-strength bond.

## Description

### Technical Field

The invention relates to road construction, specifically to elements of road markings that ensure visibility of these markings in low-light conditions.

### Background Art

A known device is a road reflector (Russian Patent No. 81502, published on March 20, 2009). The road reflector includes a spherical disc with a rod attached underneath. On the lateral surface of the disc, there are diametrically opposed recesses where reflective elements are fixed. A U-shaped elastic insert is installed in the groove of the reflector's body, with reflective elements placed on the ends of its arms. The arms of the insert protrude above the reflector's body. A cavity is provided on the lower side of the arms in the body, equal to the height of the arms' protrusion above the reflector's body. The road reflector is fixed in the road surface using bushings with screws. When a vehicle's wheel runs over the arms of the elastic insert, the arms bend into the cavity, protecting the elastic insert's structure from damage. After the wheel passes over the reflector, the arms return to their original position due to the elastic properties of the insert.

The drawback of this known technical solution is the complexity of manufacturing and installation, the presence of thin parts prone to rapid wear, and the use of screws for fastening, which can cause tire damage to passing vehicles when the reflector is removed from the road surface.

Another known device is the KDZ-type reflector according to GOST 32866-2014, the Interstate Standard. Public Roads. Road Reflectors. Technical Requirements. The KDZ reflector is designed to separate opposing and same-direction traffic flows, mark pedestrian crossings, and artificial bumps. KDZ reflectors are made in the form of a hemisphere or a truncated pyramid. Reflective elements are placed on one or two opposite lateral surfaces of the KDZ reflector. Various optical elements can be used for the KDZ reflector: film-based, prismatic, and spherical. However, film-based optical elements peel off from the reflector under environmental factors and vehicle impact. Prismatic and spherical optical elements fall out of the reflector under environmental factors and vehicle impact, reducing its reflective capability and reliability. KDZ-type reflectors are attached to the road surface using adhesive. Metal KDZ-type reflectors are equipped with anchors for fixing to the road surface. Holes may also be provided for attaching KDZ-type reflectors to the road surface using screws. However, during operation, the adhesive layer deteriorates under vehicle and climatic conditions, causing the reflector to detach from the road marking. When using anchor or screw fastening, they become loose and are pulled out of the road surface, posing a puncture risk to vehicle tires. Thus, the overall reliability of the reflector is reduced.

The drawback of this known technical solution is its low operational reliability.

The closest prior art (prototype) is a plastic road reflector, information about which is available on the website https://plasto.ru/viewpage.php?page_id=406 (accessed on August 24, 2022). The reflector is made of plastic. Reflective elements are made of reflective film. The reflector is shaped like a truncated pyramid with rounded sidewalls. Reflective elements are placed on two opposite sidewalls. The reflectors are attached to the road surface using bitumen adhesive. Under environmental factors, the film-based reflective element quickly wears out and peels off from the reflector's surface, negatively affecting the overall reliability of the device.

The drawback of the prototype is its low operational reliability.

### Technical Result

The technical result of the proposed invention is to increase operational reliability.

### Achieving the Technical Result

The technical result is achieved by a road reflector comprising a reflector body with a surface part and optical elements. The reflector body is bounded by at least a first lateral surface, a second lateral surface, and a lower surface. The surface part is located on at least the first lateral surface. The optical elements are embedded in the surface part by placing and temporarily fixing the optical elements on the inner surface of a mold, followed by pouring a working material into the mold to form the reflector body, partially enveloping the optical elements, curing the material to form the reflector body with embedded optical elements, and separating it from the mold. In one embodiment, the first and/or second lateral surfaces are cylindrical. In another embodiment, the optical elements are glass beads. In a third embodiment, the optical elements are glass beads with a reflective layer on part of the beads embedded in the surface part. In a fourth embodiment, the reflective layer is mirror-like.

### Brief Description of the Drawings

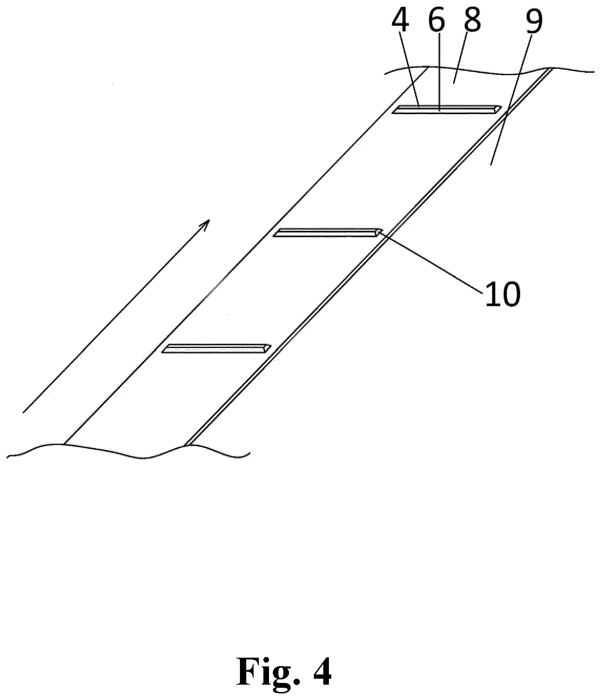

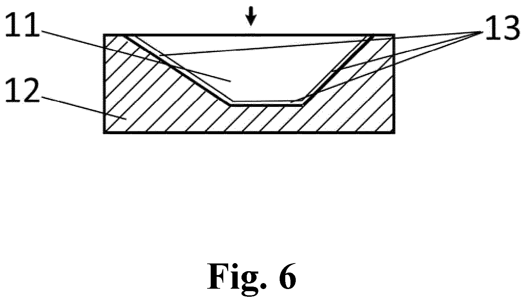

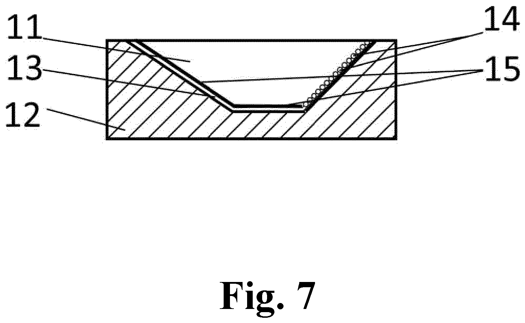

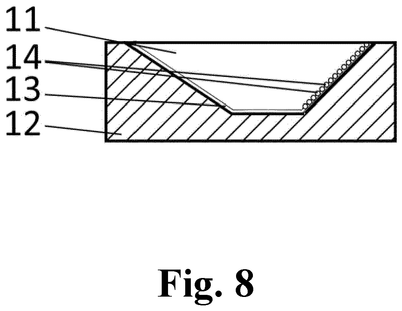

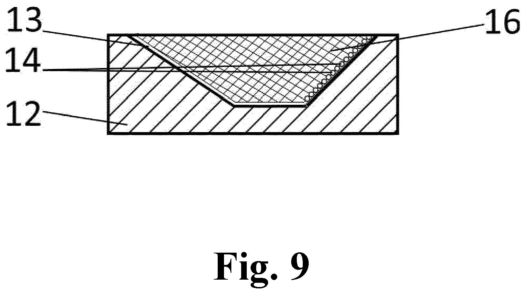

The invention is illustrated by drawings (Figs. 1-9), where Fig. 1 shows a one-sided road reflector installed in a road marking, in cross-section; Fig. 2 shows a two-sided road reflector installed in a road marking, in cross-section; Fig. 3 shows a one-sided road reflector with a cylindrical reflective surface, installed in a road marking, in cross-section; Fig. 4 shows the arrangement of road reflectors on a road marking strip; Fig. 5 shows a mold for manufacturing a one-sided road reflector; Figs. 6-9 show the stages of manufacturing a one-sided road reflector.

The drawings are labeled as follows: first lateral surface 1, lower surface 2, upper surface 3, reflector body 4, second lateral surface 5, surface part 6, optical element 7, road marking 8, road surface 9, end 10, cavity 11, mold 12, temporary adhesive layer 13, glass beads 14, protective layer 15, working material 16.

### General Remarks

According to GOST 32866-2014, the Interstate Standard. Public Roads. Road Reflectors.

Technical Requirements:
- Clause 3.1: A road reflector (cat's eye) is a light-signaling device with a reflective element(s) and fastening elements, used to indicate the direction of movement or the location of an obstacle on the road in low-light conditions.
- Clause 3.2: Reflective element: Part of a road reflector with optical elements that return light.
- Clause 3.5: Spherical-type reflective element: Part of a road reflector with optical elements made of individual spheres or a plate with a system of spherical optical elements.
- Clause 3.6: Optical element: An optical system that reflects incident light in a direction close to the direction of incidence.
- Clause 3.7: Working surface of an optical element: The surface of an optical element that provides the light-reflecting effect.

According to Clause 3.90 of the Code of Rules 34.13330.2012 "Highways," approved by the Order of the Ministry of Regional Development of the Russian Federation (Minregion of Russia) dated June 30, 2012, No. 266, the road surface is the upper part of the road structure and consists of one or more layers of appropriate material, such as asphalt concrete. The road surface material consists of a mixture of bitumen and mineral grains. The mineral grains are completely coated with bitumen so that the surface layer of the road surface consists entirely of bitumen.

According to Clause 3.1 of GOST 9128-2013, Asphalt Concrete, Polymer Asphalt Concrete, Asphalt Concrete, Polymer Asphalt Concrete for Highways and Airfields. Technical Conditions. - Mineral grain is a particle of mineral material (crushed stone, gravel, sand). Mineral grain is the solid component of asphalt concrete, which forms the road surface. Bitumen is the binding agent in asphalt concrete, which forms the road surface, and is a solid or resin-like product, a mixture of hydrocarbons and their nitrogen, oxygen, sulfur, and metal-containing derivatives.

According to Clause 3.1.1 of GOST R 51256-2011, Road Markings. Classification. Technical Requirements. - Road markings generally refer to markings on the roadway, artificial structures, and road infrastructure elements that inform road users about traffic conditions and regulations on a road section.

### Disclosure of the Invention

The main elements of the road reflector are the reflector body 4 with a surface part 6 and optical elements 7.

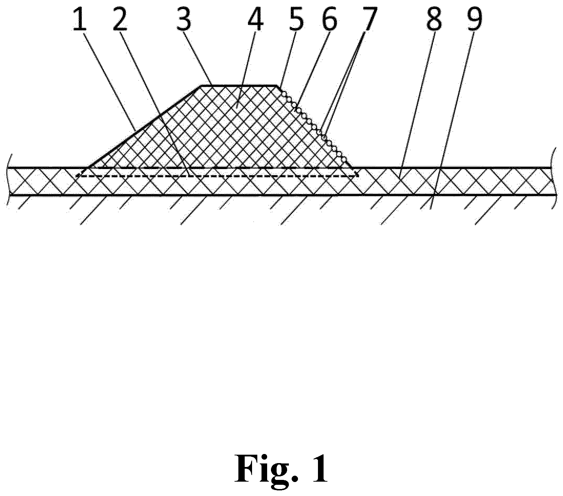

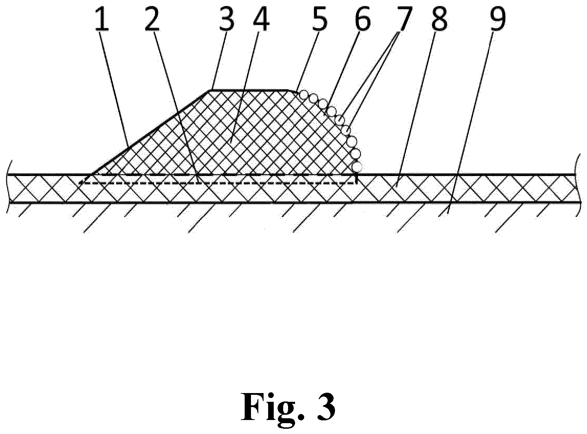

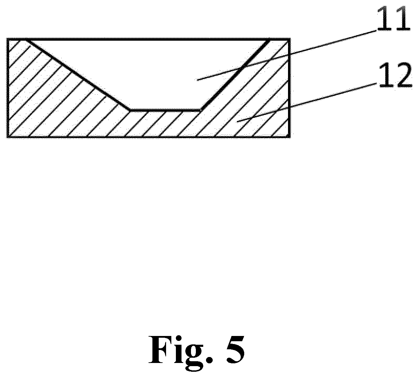

The reflector body 4 is bounded by at least a first lateral surface 1, a second lateral surface 5, and a lower surface 2. The reflector body 4 may be shaped like a truncated pyramid, truncated cone, hemisphere, or any other shape. In one embodiment (Fig. 5), the reflector body 4 may be elongated with a triangular or trapezoidal cross-section. The first lateral surface 1 and/or the second lateral surface 5 may be cylindrical (Fig. 3). The radius of the cylindrical surface is not less than the height of the reflector body 4. The height of the reflector body 4 is the distance from the lower surface 2 to the upper surface 3 or to the junction of the first lateral surface 1 with the second lateral surface 5 in the case of a triangular cross-section. Examples of the reflector body 4 with a trapezoidal cross-section are described below (Figs. 1-2). In the case of a trapezoidal cross-section, the reflector body 4 is additionally bounded by an upper surface 3. The first lateral surface 1 and the second lateral surface 5 are located on opposite sides of the reflector body 4 relative to each other. In the case of a triangular cross-section, the first lateral surface 1 and the second lateral surface 5 are adjacent to each other. In the case of a trapezoidal cross-section, the upper surface 3 and the lower surface 2 are located on opposite sides of the reflector body 4, generally parallel to each other. The dimensions of the upper surface 3 are smaller than those of the lower surface 2. The ends 10 are located on opposite sides of the reflector body 4 relative to each other. The ends 10 have a smaller area than the other surfaces of the reflector body 4. The reflector body 4 is elongated in the direction from one end 10 to the other. The reflector body 4 is made of a material similar to that used for road markings 8, such as cold plastic or thermoplastic.

The reflector body 4 may be equipped with additional elements designed to increase the adhesion area of the road reflector to the road marking 8 and improve the reliability of the reflector's attachment to the road marking 8. The additional elements may be in the form of protrusions near the lower surface 2, or protrusions on the lower surface 2, or ribbing on the lower surface 2. Additional elements may also be placed on the first lateral surface 1 and/or the second lateral surface 5 near the ends 10 to prevent rapid wear of the road reflector under vehicle wheel impact.

The surface part 6 is the part of the reflector body 4's material located on its surface and near this surface.

The optical elements 7 are, in one embodiment, glass beads 14 or glass beads 14 with a reflective layer applied to part of their surface. The reflective layer may be made of various light-colored paints (e.g., corresponding to the color coordinates specified in GOST R 51256-11, i.e., white, orange, or yellow) or mirror-like coatings made of metal.

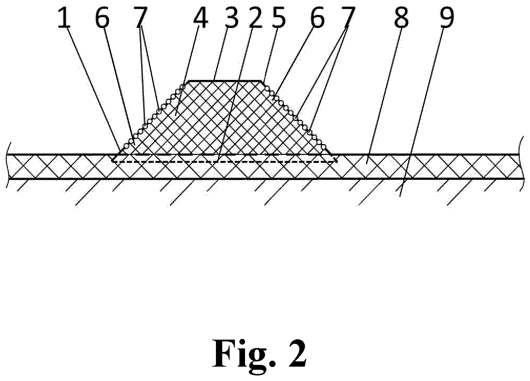

The optical elements 7 are embedded in the surface part 6 to approximately half their diameter. The reflective layer is located on the side of the optical element 7 embedded in the reflector body 4, specifically in the surface layer 6. In one embodiment, the optical elements 7 may be located in the surface part 6 on the side of the first lateral surface 1, the second lateral surface 5 (Figs. 1, 3), or both the first lateral surface 1 and the second lateral surface 5, as shown in Fig. 2.

The road marking 8 consists of lines (layers) placed on the road surface 9, made in a color contrasting with the road surface 9. One linear dimension (thickness) of this layer is much smaller than the other two linear dimensions but not less than 1 mm. The road marking 8 is made of a material similar to that of the reflector body 4, such as thermoplastic or cold plastic.

Road reflectors are placed on the road marking line 8 generally perpendicular to its length and to the direction of the main traffic flow. The length of the road reflector (in the direction from one end 10 to the other) is less than or equal to the width of the road marking strip 8. Road reflectors are installed with their optical elements 7 facing the direction of vehicle movement. The road reflector is oriented with its lower surface 2 toward the road marking 8. The road reflector is partially embedded in the road marking material 8. In one embodiment, the height of the road reflector above the road marking 8 level ranges from 4 to 20 mm. The optimal distance between road reflectors on the road marking 8 is 46 times the height of the road reflector.

The mold (or casting mold) 12 is a container for manufacturing the road reflector. The inner surfaces of the mold 12 form a cavity 11, which is the inverse of the required configuration of the road reflector (Fig. 5 shows the mold 12 for manufacturing a one-sided road reflector with a trapezoidal cross-section).

The temporary adhesive layer 13 is designed to prevent the working material 16 from sticking to the inner surfaces of the mold 12 and to ensure that the glass beads 14 and the protective layer 15 adhere to it. The temporary layer 13 may be made, for example, from an aqueous suspension of calcium carbonate.

The protective layer 15 is designed to prevent the glass beads 14 from sticking to the inner surfaces of the mold 12 not intended for forming the reflective element (the surface part 6 with embedded optical elements?). The protective layer 15 may be made, for example, from Mylar.

### Implementation of the Invention

When using the above elements and means, the invention is implemented as follows.

The temporary adhesive layer 13 is applied to the inner surfaces of the mold 12 forming the cavity 11. The thickness of the temporary adhesive layer 13 is set so that the glass beads 14 used to make the optical elements 7 are immersed in it to approximately half their diameter. Next, the protective layer 15 is placed on the inner surfaces not intended for forming the reflective element.

Then, the glass beads 14 are applied to the still-wet temporary adhesive layer 13, ensuring they are immersed in the temporary adhesive layer 13 to half their diameter. Special pneumatic equipment may be used for application, providing the glass beads 14 with kinetic energy using compressed air.

The protective layer 15 is removed. The temporary adhesive layer 13 is dried until it cures.

Next, a reflective layer is applied to the glass beads 14. In one embodiment, the reflective layer is applied, for example, by vacuum metallization, forming a mirror-like reflective layer on the surface of the glass beads 14 not immersed in the temporary adhesive layer 13.

Then, the working material 16, intended to form the reflector body 4 after curing, is poured into the cavity 11. If additional elements are needed to improve fastening, additional mold elements 12 are installed, such as a lid for forming protrusions or ribbing on the lower surface of the future road reflector. To form a denser structure of the road reflector, the mold is placed on a vibration table. Under vibration, the working material 16 is compacted, and gas bubbles are separated and removed.

The working material 16, in a fluid state, spreads throughout the mold 12 under gravity (due to its significant mass compared to the glass beads 14) and under vibration, filling every void and enveloping each glass bead 14 from all possible sides. This ensures reliable fixation of the glass beads 14 in the surface part.

Next, the filled molds 12 are left until the working material 16 cures (cold plastic sets or thermoplastic cools) to form the reflector body 4 with embedded optical elements 7 in the surface part 6. Then, the reflector body 4 with embedded optical elements 7 is separated from the mold. After the working material 16 cures, the road reflector with the cured temporary adhesive layer on its surfaces (first lateral surface 1, second lateral surface 5, ends 10, and, in one embodiment, upper surface 3) is removed from the mold 12. The cured temporary adhesive layer 13 is washed off.

The resulting road reflectors are used in the manufacture of road markings 8. Cold plastic or thermoplastic is applied to the road surface 9 to form the road marking 8.

The road reflectors are installed in the still-unset (viscous) road marking material 8 with their lower surface 2 embedded in the road marking 8. The road reflectors are partially immersed in the road marking material 8. Since the road reflectors are made of the same material as the road marking 8, a single material object with high connection strength is formed. The additional elements in the form of protrusions and/or ribbing increase the adhesion area of the road reflector to the road marking 8, enhancing the overall reliability of the device. Moreover, since the fastening does not include metal rod elements such as screws and anchors as in the prior art and prototype, there is no risk of tire damage if the road reflector is accidentally removed from the road marking 8.

During operation, light sources, such as vehicle headlights, emit radiation, including visible light. Most of the light rays falling directly on the road surface 9 are absorbed. Some light rays hit the road marking 8 (dividing strip) with installed road reflectors. The light ray is partially reflected and, refracting, passes into the internal volume of the optical elements 7. The light rays passing through the optical elements 7 are almost entirely reflected from the boundary between the glass and the reflective layer on the surface of the glass beads 14. Most of these reflected light rays return to the light source. The reflective elements (first surface 1 with optical elements 7 or second lateral surface 5 with optical elements 7) are positioned at an angle to the road surface, increasing the light-reflecting coefficient compared to horizontal road markings 8 without road reflectors. This also creates a noise effect when a tire passes over the marking line 8 with installed road reflectors.

The optical elements 7 are securely held in the road reflector material by placing and temporarily fixing the optical elements 7 on the inner surface of the mold 12, pouring the working material of the reflector body 4 into the mold 12, partially enveloping the optical elements 7, curing the material, and separating it from the mold 12.

Thus, by implementing the road reflector with the combination of essential features described in the claims, the operational reliability of the road reflector is increased.

## Claims

1. A road reflector comprising a reflector body with a surface portion and optical elements, the reflector body being bounded by at least a first side surface, a second side surface, and a bottom surface, the surface portion being located on the side of at least the first side surface, the optical elements being embedded in the surface portion by placing and temporarily securing the optical elements on the inner surface of a molding form, subsequently pouring a working material of the reflector body into the molding form, partially enveloping the optical elements with the material, followed by curing to form the reflector body with the optical elements embedded in the surface portion, and separating them from the molding form.

2. The road reflector according to Item 1, **characterized in that** the first side surface and/or the second side surface are cylindrical.

3. The road reflector according to Item 1, **characterized in that** the optical elements are made in the form of glass beads.

4. The road reflector according to Item 1, **characterized in that** the optical elements are made in the form of glass beads with a retroreflective layer located on a portion of the glass beads embedded in the surface portion.

5. The road reflector according to Item 1, **characterized in that** the retroreflective layer is made from a retroreflective film.
